# EUROPÄISCHE PATENTSCHRIFT

(11) **EP 1 128 123 B1**
(45) Veröffentlichungstag und Bekanntmachung des Hinweises auf die Patenterteilung: **04.07.2007**
(21) Anmeldenummer: 01103376.8
(22) Anmeldetag: 13.02.2001
(51) Int. Cl.: F17C 1/08, F17C 13/00

(54) **Speicherbehälter für kryogene Flüssigkeiten mit verstärkten Wandungen**
Reservoir with reinforced walls for storing cryogenic liquids
Réservoir avec parois renforcées pour le stockage des liquides cryogéniques

(30) Priorität: 25.02.2000 DE 10008985
(43) Veröffentlichungstag der Anmeldung: 29.08.2001
(73) Patentinhaber: Linde Aktiengesellschaft, 65189 Wiesbaden (DE)
(72) Erfinder: Ettlinger, Erich, Dr., 82041 Oberhaching (DE)
(74) Vertreter: Zahn, Christoph

(56) Entgegenhaltungen:
- EP-A- 0 981 009
- DE-A- 19 524 680
- GB-A- 2 089 014
- US-A- 2 339 554

## Beschreibung

Die Erfindung betrifft einen Speicherbehälter, insbesondere für kryogene Flüssigkeiten, mit einem äußeren und wenigstens einem inneren Behälter, wobei sich zwischen dem äußeren und dem oder den inneren Behältern ein Isolationsraum befindet.

Ein derartiger Behälter ist aus der Druckschrift DE-A-19 524 681 bekannt.

Des Weiteren betrifft die Erfindung bevorzugte Verwendungen eines derartigen Speicherbehälters.

Technische Gase, wie Helium, Wasserstoff, Stickstoff, Sauerstoff oder LNG (Liquid Natural Gas), werden in Speicherbehältern häufig im flüssigen Aggregatszustand gelagert oder transportiert. Derartige Speicherbehälter sind in der Regel doppelwandig ausgeführt, wobei in dem inneren Behälter das verflüssigte Gas gelagert wird. Der Zwischenraum zwischen dem äußeren und dem inneren Behälter wird im Regelfall zum Zwecke der Isolierung evakuiert.

Aufgrund dieser Vakuumisolierung wirken sowohl auf den inneren Behälter, insbesondere bei einer Speicherung des Flüssiggases unter erhöhtem Druck, als auch auf den äußeren Behälter hohe Kräfte, die bei einer Speicherbehälterkonstruktion mit ebenen Seitenflächen hohe Wandstärken erforderlich machen. Dies ist der Grund dafür, dass derartige Speicherbehälter bisher meist in zylindrischer oder kugelförmiger Bauweise ausgeführt werden.

Wasserstoff und LNG werden in zunehmendem Maße als Kraftstoff für Fahrzeuge, Schiffe oder Flugzeuge eingesetzt. Die Speicherung erfolgt hierbei vorzugsweise in flüssiger Form in den oben beschriebenen Speicherbehälterkonstruktionen. Zylindrisch bauende Speicherbehälter können jedoch im Regelfall der Fahrzeuggeometrie nur schlecht angepasst werden. So sollen beispielsweise bei den sog. Niederflurbussen, die insbesondere im Personennahverkehr zum Einsatz kommen, die benötigten Speicherbehälter im oberen Bereich des Fahrzeuges oder auf dem Fahrzeugdach angeordnet werden; dies bedingt großflächige und möglichst niedrig bauende Speicherbehälterkonstruktionen.

Aus der DE-A-198 37 886 ist ein gattungsgemäßer Speicherbehälter für kryogene Medien bekannt, bei dem die auf den äußeren und/oder den oder die inneren Behälter einwirkenden Kräfte durch eine oder mehrere Stützen aufgenommen werden, wobei diese so angeordnet sind, dass sie keinen Beitrag zur Wärmeleitung zwischen dem oder den inneren und dem äußeren Behälter liefern.

Diese Konstruktion weist jedoch den Nachteil auf, dass aufgrund der konstruktiv vergleichsweise aufwendigen Gestaltung des oder der inneren Behälter das Aufbringen der im Regelfall verwendeten Superisolation auf dem oder den inneren Behälter sehr aufwendig ist. Die erwähnte Superisolation dient zur Verringerung der Wärmestrahlung auf den oder die inneren Behälter.

Aufgabe vorliegender Erfindung ist es, einen gattungsgemäßen Speicherbehälter anzugeben, der die angeführten Nachteile vermeidet und dessen Geometrie bzw. Gestalt sich an die jeweiligen gegebenen Platzverhältnisse anpassen läßt. Ferner sollen das Gewicht des Speicherbehälters sowie dessen Wandstärken optimiert werden.

Diese Aufgabe wird erfindungsgemäß durch die Merkmale des Anspruches 1 gelöst.

Hierbei sind die Mittel zum Verstärken der Behälterwandung des äußeren und/oder des inneren Behälters beispielsweise als wenigstens ein auf der Behälterwandung des äußeren und/oder des inneren Behälters angeordneter Steg ausgebildet sein. Derartige Stege ermöglichen eine Versteifung und damit ein Verstärken der Behälterwandung, so dass die Wandstärke verringert werden kann.

Ebenfalls sind die Mittel zum Verstärken der Behälterwandung des inneren Behälters als wenigstens ein im wesentlichen dem Querschnitt des inneren Behälters angepasstes Stützblech ausgebildet. Das oder die Stützbleche weisen hierbei vorzugsweise Öffnungen auf.

Diese Stützbleche dienen nicht nur der Versteifung bzw. Verstärkung der Behälter, sie verringern zudem das Schwappen der in dem oder den inneren Behältern gelagerten Flüssigkeit.

Bei der Verwendung der vorgenannten Mittel zum Verstärken der Behälterwandung sind nunmehr nahezu beliebige Speicherbehältergestaltungen realisierbar. Somit können auch Speicherbehälter, bei denen der äußere und/oder der innere Behälter einen flachen Querschnitt aufweist, in Betracht gezogen werden. Insbesondere diese Form des Speicherbehälters bietet sich aufgrund der optimalen Raumausnutzung bei einem Einbau des erfindungsgemäßen Speicherbehälters in Pkws und Bussen an.

Den erfindungsgemäßen Speicherbehälter weiterbildend wird vorgeschlagen, dass zumindest eine Stütze zur Erhöhung der Stabilität des inneren und/oder äußeren Behälters vorgesehen ist, wobei die Stütze keine wärmeleitende Verbindung zwischen dem äußeren und dem inneren Behälter herstellt.

Die Stützen stehen entweder nur mit dem äußeren oder nur mit dem oder den inneren Behältern in Kontakt. Die Stützen verbinden also keinesfalls nicht einen inneren mit dem äußeren Behälter. Ein Wärmeeintrag in den inneren Behälter über die Wärmeleitung durch die oder eine der Stützen ist somit definitiv ausgeschlossen.

Ist lediglich ein innerer Behälter vorgesehen, so verbinden die Stützen bevorzugt gegenüberliegende Wände des inneren Behälters, um so die durch das den Innenbehälter umgebende Vakuum hervorgerufenen Zugkräfte zu kompensieren. In analoger Weise sind auch die den äußeren Behälter stabilisierenden Stützen bevorzugt zwischen gegenüberliegenden Wänden dieses Behälters angeordnet. Bei mehreren inneren Behältern können die Stützen entweder innerhalb eines Behälters vorgesehen werden oder diesen in Form eines stabilisierenden Gerüsts umgeben; denkbar ist ferner, dass sie der Abstützung der inneren Behälter gegeneinander dienen. Entsprechend ihrer Anordnung sind die Stützen entweder für die Aufnahme von Zug- oder Druckkräften ausgelegt.

Um eine große Menge der kryogenen Flüssigkeit speichern zu können, ist es von Vorteil, die Form des inneren Behälters der des äußeren Behälters anzupassen, um auf diese Weise den zur Verfügung stehenden Platz so vollständig als möglich auszunutzen, wobei jedoch zwischen dem äußeren und dem inneren Behälter ein isolationsraum verbleiben muss. Daher sind im Regelfall Stützen für den äußeren und den inneren Behälter vorzusehen. Der innere Behälter weist bei einer derartigen Konstruktion Durchführungen oder Aussparungen für die Stützen des äußeren Behälters auf; dadurch wird erreicht, dass die Stützen des äußeren Behälters nicht mit dem inneren Behälter in wärmeleitenden Kontakt kommen können.

Eine vorteilhafte Ausgestaltung des erfindungsgemäßen Speicherbehälters ist dadurch gekennzeichnet, dass mehr als ein innerer Behälter von dem äußeren Behälter umgeben ist.

Es ist aus konstruktiver Sicht oftmals zweckmäßig, nicht nur einen, sondern mehrere innere Behälter in einen gemeinsamen äußeren Behälter vorzusehen. Die Gestalt und Größe der einzelnen Innenbehälter werden dabei vorzugsweise so an die Gestalt des äußeren Behälters angepasst, dass dessen Volumen optimal ausgenutzt werden kann. Die Verwendung mehrerer innerer Behälter bietet mehrere Vorteile; so können Standardbehälter, wie beispielsweise Zylinder, verwendet werden und generell kann die Geometrie bzw. Gestalt der inneren Behälter freier gewählt werden.

Werden mehrere innere Behälter vorgesehen, so sind diese - entsprechend einer weiteren vorteilhaften Ausgestaltung des erfindungsgemäßen Speicherbehälters - flüssigkeits- und/oder gasseitig miteinander verbunden und/oder verbindbar ausgebildet. Bei der Realisierung dieser Ausgestaltung ist beispielsweise lediglich eine einzige Füllstandsanzeige oder lediglich ein Druckmeßgerät für alle inneren Behälter erforderlich.

Der erfindungsgemäße Speicherbehälter eignet sich insbesondere für die Speicherung flüssigen Wassserstoffs (LH₂), flüssigen Sauerstoffs (LO₂), flüssigen Stickstoffs (LN₂), flüssigen Heliums (LHe) sowie von LNG. Der erfindungsgemäße Speicherbehälter ist aber nicht nur zur Speicherung kalter Medien, sondern ebenso zur Speicherung warmer oder heißer Medien vorteilhaft. Der erfindungsgemäße Speicherbehälter ist immer dann vorteilhaft verwendbar, wenn zwischen dem zu speichernden Medium - sie es flüssig und/oder gasförmig - und der Umgebung eine deutliche Temperaturdifferenz besteht. Die hohe Anpassbarkeit des Speicherbehälters an unterschiedlichste Platzangebote ist besonders bei der Verwendung dieser Speicherbehälter in Fahrzeugen, insbesondere Landfahrzeugen, von Vorteil.

Besonders zweckmäßig ist der Einsatz des erfindungsgemäßen Speicherbehälters bei der Speicherung von Flüssigkeiten bei einem Druck von mehr als 3 bar, insbesondere bei einem Druck zwischen 3 und 8 bar.

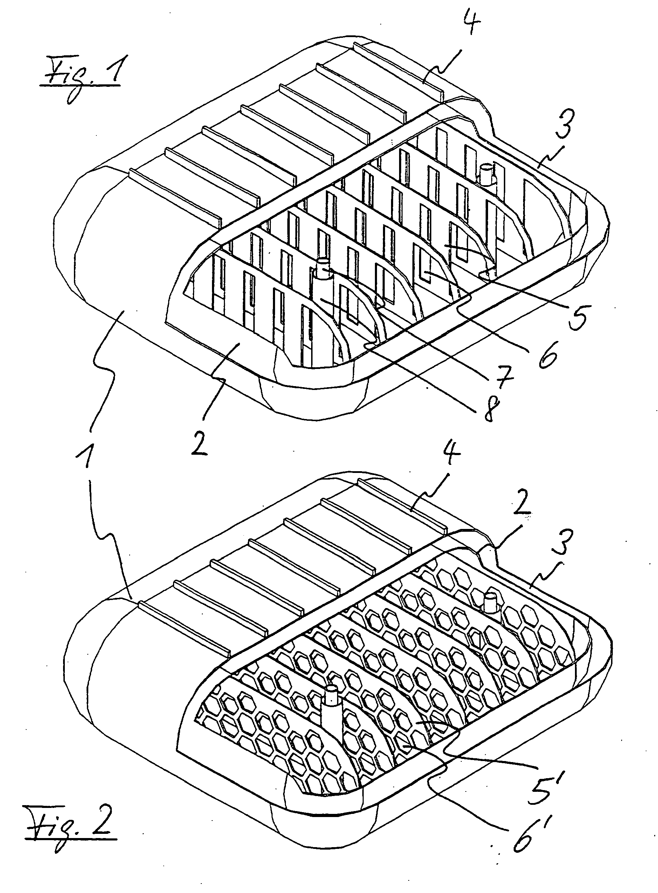

Der erfindungsgemäße Speicherbehälter sowie weitere Ausgestaltungen desselben seien anhand der in den Figuren 1 und 2 dargestellten Ausführungsbeispiele näher erläutert. Hierbei zeigen:
- Figur 1:: eine perspektivische (Teil)Schnittdarstellung durch eine erste Ausführungsform des erfindungsgemäßen Speicherbehälters
- Figur 2:: eine perspektivische (Teil)Schnittdarstellung durch eine zweite Ausführungsform des erfindungsgemäßen Speicherbehälters

In den Figuren 1 und 2 ist ein Speicherbehälter dargestellt, wie er beispielsweise in Pkws und/oder Bussen zur Speicherung von flüssigem Wasserstoff oder LNG als Kraftstoff eingesetzt wird. Die flache Form des Speicherbehälters eignet sich besonders für eine Anordnung im oberen Busbereich, auf dem Dach eines Busses bzw. allgemein auf Fahrzeugdächem und/oder in einem Pkw.

Aufgrund seiner Form werden derartige Speicherbehälter auch als sog. Flachtanks bezeichnet. Insbesondere diese Gestaltung des Speicherbehälters ermöglicht ein vergleichsweise einfaches Aufbringen der erwähnten Superisolation und darüber hinaus eine kostengünstige Serienfertigung des Speicherbehälters.

Der Speicherbehälter besteht aus einem äußeren Behälter 1 sowie einem darin angeordneten inneren Behälter 1. Zwischen dem äußeren 1 und dem inneren Behälter 2 befindet sich ein Isolationsraum 3, der in der Regel vakuumisoliert ist, aber beispielsweise auch mit Perlit oder einem anderen Isolationsmaterial gefüllt sein kann. Der Übersichtlichkeit halber ist bzw. sind in den Figuren 1 und 2 keine Befüll- und Entnahmeleitungen dargestellt.

Der innere Behälter besitzt ein Fassungsvermögen von ca. 100 Liter. Die Abmessungen des äußeren Behälters betragen etwa 80 cm x 90 cm x 30 cm. (Tiefe x Länge x Höhe). Mit einer derartigen Gestaltung des Speicherbehälters können jedoch auch Kapazitäten von bis zu 1000 und mehr Liter realisiert werden.

Erfindungsgemäß sind nunmehr auf der Behälterwandung des äußeren Behälters 1 mehrere Stege 4 parallel zueinander angeordnet. Diese Stege 4 verhindern, dass die Behälterwandung des äußeren Behälters 1 durch die von dem Vakuum im Isolationsraum 3 hervorgerufenen Zugkräfte nach innen verformt werden kann.

Der innere Behälter 2 weist mehrere, seinem Querschnitt angepasste, ebenfalls parallel zueinander angeordnete Stützbleche 5 bzw. 5' auf. Die Stützbleche bestehen vorzugsweise aus Edelstahl und werden mit der Behälterwandung des inneren Behälters 2 verschweisst. Sie weisen unterschiedlich geformte Öffnungen 6 bzw. 6' auf.

Die in der Figur 1 dargestellte Form der Öffnungen 6 eignet sich insbesondere in Speicherbehälter, die für höhere Drücke ausgelegt sind, während die in der Figur 2 dargestellte Form der Öffnungen 6' bei Speicherbehältern, die für niedrigere Drücke ausgelegt sind, zur Anwendung kommen kann.

Zur Abstützung des äußeren Behälters 1 sind zudem Stützen 7 vorgesehen. Diese sind zwischen zwei gegenüberliegenden Wänden des äußeren Behälters 1 verstrebt und bilden keine wärmeleitende Verbindung zu dem inneren Behälter 2. Die Stützen 7 reichen hierbei durch entsprechende, an dem inneren Behälter 2 vorgesehene Durchführungen.

## Patentansprüche

1. Speicherbehälter, insbesondere für kryogene Flüssigkeiten, mit einem äußeren und wenigstens einem inneren Behälter, wobei sich zwischen dem äußeren und dem oder den inneren Behältern ein Isolationsraum befindet und der äußere (1) und der/die innere(n) Behälter Mittel zum Verstärken der Behälterwandungen aufweisen, **dadurch gekennzeichnet, dass** die Mittel zum Verstärken der Behälterwandung des äußeren (1) und/oder des inneren Behälters (2) als wenigstens ein auf der Behälterwandung des äußeren (1) und/oder des inneren Behälters (2) angeordneter Steg (4) und die Mittel zum Verstärken der Behälterwandung des inneren Behälters (2) als wenigstens ein im wesentlichen dem Querschnitt des inneren Behälters (2) angepasstes Stützblech (5, 5') ausgebildet sind.

2. Speicherbehälter nach Anspruch 1, **dadurch gekennzeichnet, dass** das oder die im wesentlichen dem Querschnitt des inneren Behälters (2) angepassten Stützbleche (5, 5') mit dem Behälter verschweisst sind.

3. Speicherbehälter nach Anspruch 1 oder 2, **dadurch gekennzeichnet, dass** das oder die im wesentlichen dem Querschnitt des inneren Behälters (2) angepassten Stützbleche (5, 5') Öffnungen (6, 6') aufweisen.

4. Speicherbehälter nach einem der vorhergehenden Ansprüche, **dadurch gekennzeichnet, dass** zumindest eine Stütze (7) zur Erhöhung der Stabilität des inneren und/oder äußeren Behälters vorgesehen ist, wobei die Stütze (7) keine wärmeleitende Verbindung zwischen dem äußeren (1) und dem inneren Behälter (2) herstellt.

5. Speicherbehälter nach Anspruch 4, **dadurch gekennzeichnet, dass** die Stütze (7) die Behälterwandungen des äußeren Behälters (1) und/oder des oder der inneren Behälter (2) miteinander verbindet.

6. Speicherbehälter nach einem der vorhergehenden Ansprüche, **dadurch gekennzeichnet, dass** mehrere innere Behälter (2) vorgesehen sind und diese unterschiedliche Formen und/oder Größen aufweisen.

7. Speicherbehälter nach einem der vorhergehenden Ansprüche, **dadurch gekennzeichnet, dass** die inneren Behälter (2) flüssigkeits- und/oder gasseitig miteinander verbunden sind und/oder verbindbar ausgebildet sind.

8. Speicherbehälter nach einem der vorhergehenden Ansprüche, **dadurch gekennzeichnet, dass** der äußere (1) und/oder der innere Behälter (2) einen flachen Querschnitt aufweisen.

9. Speicherbehälter nach einem der vorhergehenden Ansprüche, **dadurch gekennzeichnet, dass** der oder die inneren Behälter (2) ein Fassungsvermögen von 100 bis 1000 I aufweisen.

10. Verwendung eines Speicherbehälters nach einem der vorhergehenden Ansprüche zur Speicherung kryogener Flüssigkeiten, insbesondere zur Speicherung flüssigen Wasserstoffs oder LNG, in einem Fahrzeug, insbesondere in einem Landfahrzeug.

11. Verwendung eines Speicherbehälters nach einem der vorhergehenden Ansprüche zur Speicherung von Flüssigkeiten bei einem Druck von mehr als 3 bar, insbesondere bei einem Druck zwischen 3 und 8 bar.

## Claims

1. Storage tank, in particular for cryogenic liquids, comprising an outer and at least one inner tank, with an insulation space being located between the outer and the inner tank or tanks and the outer (1) and the inner tank or tanks having means for strengthening the tank walls, **characterized in that** the means for strengthening the tank wall of the outer (1) and/or of the inner tank (2) are constructed as at least one web (4) arranged on the tank wall of the outer (1) and/or of the inner tank (2) and the means for strengthening the tank wall of the inner tank (2) are constructed as at least one supporting plate (5, 5') adapted essentially to the cross-section of the inner tank (2).

2. Storage tank according to Claim 1, **characterized in that** the supporting plate or plates (5, 5') adapted essentially to the cross-section of the inner tank (2) are welded to the tank.

3. Storage tank according to Claim 1 or 2, **characterized in that** the supporting plate or plates (5, 5') adapted essentially to the cross-section of the inner tank (2) have openings (6, 6').

4. Storage tank according to one of the preceding claims, **characterized in that** there is provided at least one support (7) for increasing the stability of the inner and/or outer tank, the support (7) establishing no heat-conducting connection between the outer (1) and the inner tank (2).

5. Storage tank according to Claim 4, **characterized in that** the support (7) connects the walls of the outer tank (1) and/or of the inner tank or tanks (2) to one another.

6. Storage tank according to one of the preceding claims, **characterized in that** there are provided a plurality of inner tanks (2) and these have different shapes and/or sizes.

7. Storage tank according to one of the preceding claims, **characterized in that** the inner tanks (2) are connected to one another and/or are mutually connectable on the liquid side and/or on the gas side.

8. Storage tank according to one of the preceding claims, **characterized in that** the outer (1) and/or the inner tank (2) have a flat cross-section.

9. Storage tank according to one of the preceding claims, **characterized in that** the inner tank or tanks (2) have a capacity of from 100 to 1000 litres.

10. Use of a storage tank according to one of the preceding claims for storing cryogenic liquids, in particular for storing liquid hydrogen or LNG, in a vehicle, in particular in a land vehicle.

11. Use of a storage tank according to one of the preceding claims for storing liquids at a pressure of greater than 3 bar, in particular at a pressure of between 3 and 8 bar.

## Revendications

1. Réservoir de stockage, notamment pour des liquides cryogéniques, avec un réservoir extérieur et au moins un réservoir intérieur, une chambre d'isolation se trouvant entre le réservoir extérieur et le ou les réservoir(s) intérieur(s), et dans lequel le réservoir extérieur (1) et le ou les réservoir(s) intérieur(s) comportent des moyens pour renforcer les parois des réservoirs, **caractérisé en ce que** les moyens de renforcement de la paroi de réservoir du réservoir extérieur (1) et/ou du réservoir intérieur (2) sont constitués comme au moins une tige (4) disposée sur la paroi de réservoir du réservoir extérieur (1) et/ou du réservoir intérieur (2), et **en ce que** les moyens de renforcement de la paroi de réservoir du réservoir intérieur (2) sont constitués comme au moins une plaque de soutien (5, 5') adaptée essentiellement à la section transversale du réservoir intérieur (2).

2. Réservoir de stockage selon la revendication 1, **caractérisé en ce que** la ou les plaque(s) de soutien (5, 5') essentiellement adaptées à la section transversale du réservoir intérieur (2) sont soudées avec le réservoir.

3. Réservoir de stockage selon la revendication 1 ou 2, **caractérisé en ce que** la ou les plaque (s) de soutien (5, 5') essentiellement adaptées à la section transversale du réservoir intérieur (2) comportent des ouvertures (6, 6').

4. Réservoir de stockage selon l'une des précédentes revendications, **caractérisé par** au moins un support (7) permettant d'augmenter la stabilité du réservoir intérieur et/ou extérieur, le support (7) ne générant pas de liaison conductrice de chaleur entre le réservoir extérieur (1) et le réservoir intérieur (2).

5. Réservoir de stockage selon la revendication 4, **caractérisé en ce que** le support (7) relie entre elles les parois de réservoir du réservoir extérieur (1) et/ou du ou des réservoir(s) intérieur(s) (2).

6. Réservoir de stockage selon l'une des précédentes revendications, **caractérisé en ce que** plusieurs réservoirs intérieurs (2) sont prévus et **en ce que** ces derniers possèdent des formes et/ou des poids différents.

7. Réservoir de stockage selon l'une des précédentes revendications, **caractérisé en ce que** les réservoirs intérieurs (2) sont reliés entre eux du côté du liquide et/ou du gaz et/ou **en ce qu'**ils sont constitués de façon à pouvoir être reliés entre eux.

8. Réservoir de stockage selon l'une des précédentes revendications, **caractérisé en ce que** le réservoir extérieur (1) et/ou le réservoir intérieur (2) possèdent une section transversale plate.

9. Réservoir de stockage selon l'une des précédentes revendications, **caractérisé en ce que** le ou les réservoir(s) intérieur(s) possèdent une capacité de 100 à 1000 1.

10. Utilisation d'un réservoir de stockage selon l'une des précédentes revendications, pour le stockage de liquides cryogéniques, notamment pour le stockage d'hydrogène liquide ou de GNL, dans un véhicule, notamment dans un véhicule routier.

11. Utilisation d'un réservoir de stockage selon l'une des précédentes revendications, pour le stockage de liquides sous une pression de plus de 3 bar, notamment avec une pression entre 3 et 8 bar.
